# DEMANDE DE BREVET EUROPEEN

(11) **EP 3 141 618 A1**
(43) Date de publication de la demande: **15.03.2017**
(21) Numéro de dépôt: 16185860.0
(22) Date de dépôt: 26.08.2016
(51) Int. Cl.: C21D 1/10, C23C 8/22, C23C 8/32, C23C 8/34, C21D 1/42, H05B 6/10, C21D 9/00

(54) **PROCÉDÉ DE TRAITEMENT D'UNE OU PLUSIEURS PIÈCES EN ACIER**

(30) Priorité: 14.09.2015 FR 1558532
(71) Demandeur: Peugeot Citroën Automobiles SA, 78140 Vélizy-Villacoublay (FR)
(72) Inventeur: LARDINOIS, JEROME, 90400 TREVENANS (FR); LAPIERRE, PHILIPPE, 25400 EXINCOURT (FR)

(57) **Abrégé**

Procédé de traitement de surface, comprenant une étape préliminaire de préchauffe (10, 20) d'au moins une pièce en acier à traiter et une étape de traitement thermochimique (30) de ladite au moins une pièce une fois celle-ci préchauffée, **caractérisé en ce que** l'étape préliminaire de préchauffe comprend un chauffage de la au moins une pièce par induction (10).

## Description

### Contexte technique

L'invention s'inscrit dans le domaine du traitement de surface des pièces en acier.

Les pièces en acier destinées aux industries mécaniques, comme l'industrie automobile, l'industrie des machines-outils, l'industrie ferroviaire ou l'industrie aéronautique, requièrent très souvent un traitement de surface pour améliorer leur résistance mécanique, telle leur dureté ou leur tenue en fatigue. Le traitement est un traitement thermochimique.

Le traitement de surface peut être une cémentation, c'est-à-dire l'introduction par diffusion dans l'acier, à partir de la surface des pièces, d'atomes de carbone, ou une carbonitruration, c'est-à-dire l'introduction dans l'acier, toujours par diffusion à partir de la surface des pièces, d'atomes de carbone et d'atomes d'azote.

L'azote est issu par exemple du gaz ammoniac, alors que le carbone est issu d'éthylène, acétylène, méthanol, et/ou d'alcanes ou autres hydrocarbures, comme par exemple le propane.

Les pièces à traiter sont tout d'abord chauffées avant d'être traitées à l'aide de gaz carbonés ou azotés dans un four.

On connait des procédés réalisés à une pression proche de la pression atmosphérique ou d'un bar, et à une température de l'ordre de 800 °C.

On connait aussi des procédés dits « basse pression » réalisés à une pression plus faible par exemple 0,1 bar ou 0.01 bar et à des températures similaires, plus faibles ou plus élevées, par exemple de l'ordre de 940°C, voire 1000°C ou 1050°C. Dans ces derniers cas on parle de procédés à haute température. Ils peuvent être mis en oeuvre entre autres dans un four continu, ou dans un système dit « multi-cellules ».

FR2884523 décrit un procédé de carbonitruration à basse pression. Il nécessite tout d'abord une étape de chauffage de l'enceinte, dans laquelle la température est fixée par des moyens de chauffage qui provoquent une élévation de la température dans l'enceinte. L'élévation de la température dans l'enceinte prend du temps et augmente la durée du cycle de traitement.

Typiquement, pour les traitements à haute température, le temps de préchauffe, ou mise en solution des pièces, est d'environ 40 minutes à 1 h15 selon la massivité des pièces.

### Définition de l'invention

Pour résoudre ce problème de durée de préchauffage, il est proposé un procédé de traitement de surface, comprenant une étape préliminaire de préchauffe d'au moins une pièce à traiter et une étape de traitement thermochimique de ladite au moins une pièce une fois celle-ci préchauffée, caractérisé en ce que l'étape préliminaire de préchauffe comprend un chauffage de la au moins une pièce par induction.

Ce procédé permet un gain de temps considérable, en conservant les propriétés mécaniques de la au moins une pièce. Le procédé est donc amélioré sur le plan de la productivité.

D'autres caractéristiques, optionnelles et avantageuses de l'invention sont les suivantes :
- l'étape de préchauffe et l'étape de traitement thermochimique portent sur une pluralité de pièces et les pièces de la pluralité de pièces sont disposées, aux fins de la préchauffe, pour présenter chacune au moins une surface libre dans un même plan, et des moyens pour générer des courants de Foucault sont disposés en faisant face audites surfaces libres pour procéder au chauffage par induction desdites pièces ;
- l'étape de préchauffe et l'étape de traitement thermochimique portent sur une pluralité de pièces et les pièces de la pluralité de pièces sont disposées, aux fins de la préchauffe, pour présenter chacune une surface faisant face à une surface d'au moins une autre pièce de la pluralité, et des moyens pour générer des courants de Foucault sont disposés entre les surfaces de pièces de la pluralité se faisant face pour procéder au chauffage par induction desdites pièces ;
- les pièces de la pluralité de pièces sont disposées, aux fins de la préchauffe, sur un plateau pour traitement haute température ;
- le traitement thermochimique comprend une carbonitruration ou une cémentation ;
- le chauffage par induction comprend une induction pendant une durée comprise entre 2 s et 20 min ;
- le chauffage par induction est suivi, avant l'étape de traitement thermochimique, d'une étape de chauffage complémentaire par rayonnement ; et
- le procédé met en oeuvre des moyens pour générer des courants de Foucault qui sont des moyens rétractables.

### Liste des figures

L'invention sera mieux comprise en relation avec les figures, présentées à titre d'exemples.
- la figure 1 présente le profil de température au cours de la mise en oeuvre d'un procédé selon l'art antérieur ;
- la figure 2 présente le profil de température au cours de la mise en oeuvre d'un procédé selon un mode de réalisation de l'invention ;
- la figure 3 présente un arrangement matériel pour la mise en oeuvre d'un procédé selon l'invention ;
- la figure 4 présente un autre arrangement matériel pour la mise en oeuvre d'un procédé selon l'invention.

### Description détaillée

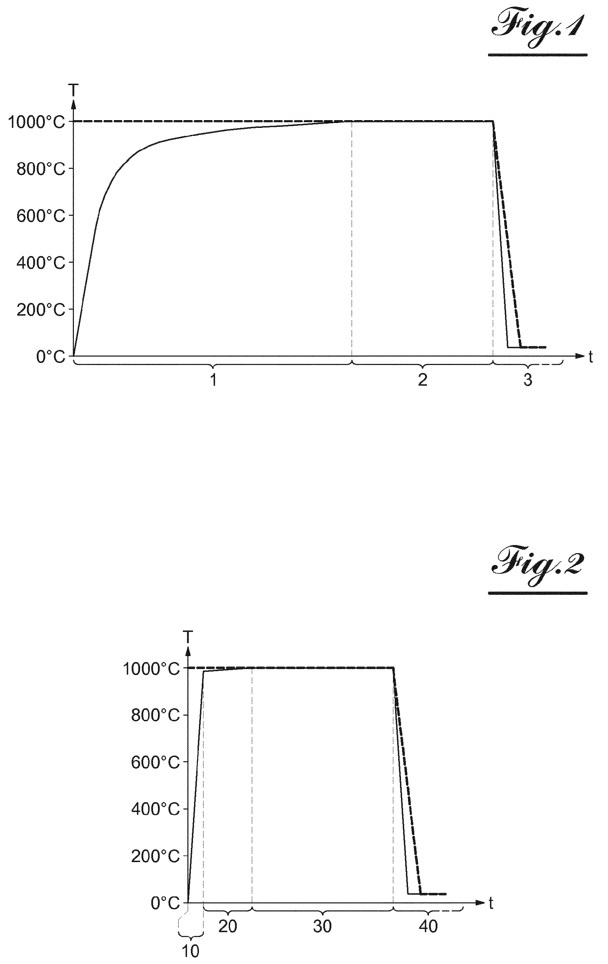

En relation avec la figure 1, on a représenté la courbe de température en fonction du temps d'un procédé de traitement de surface selon l'art antérieur. Typiquement, pour une cémentation de 15 minutes menée à 1000 °C sous basse pression pour obtenir un acier E650 à 0.35 mm, on réalise un chauffage dans une cellule à rayonnement sous diazote à 1 bar, ou 1,5 bars. La courbe montre la température des pièces, avec en pointillés la consigne de température. On chauffe 30 minutes pour que les pièces atteignent 1000°C (phase 1), puis la cémentation est ensuite menée pendant 15 minutes (phase 2), avant que l'on procède à une trempe au diazote à 10 bars, réalisée en temps masqué (phase 3).

En relation avec la figure 2, on a représenté la courbe de température en fonction du temps d'un procédé de traitement de surface selon un mode de réalisation de l'invention. Pour une cémentation de 15 minutes menée à 1000 °C sous basse pression pour obtenir un acier E650 à 0.35 mm, on réalise un préchauffage par induction sous diazote à 1 bar. La courbe montre encore la température des pièces, avec en pointillés la consigne de température. On réalise ainsi un chauffage préliminaire par induction pendant 2 minutes pour que les pièces atteignent une température proche de 1000°C (phase 10), puis on réalise un chauffage complémentaire avec la même consigne dans une cellule à rayonnement sous diazote à 1 bar pendant 5 minutes (phase 20), la température se stabilisant à 1000°C. La cémentation est menée ensuite pendant 15 minutes (phase 30), avant que l'on procède à une trempe au diazote à 10 bars, réalisée en temps masqué (phase 40).

Le chauffage par induction est adapté en durée et intensité pour que les pièces chauffent rapidement sans qu'il y ait une surchauffe locale de la pièce dégradant la tenue fonctionnelle de celle-ci.

L'exemple présenté comprend une durée de chauffage par induction de 2 minutes, mais cette durée peut par exemple être de 2 secondes ou de 20 minutes en fonction des pièces.

Le temps de cycle passe, entre le procédé de la figure 1 et celui de la figure 2 de 45 minutes à 22 minutes, soit une réduction de 50%. Le temps de préchauffe passe de 30 minutes de chauffage par rayonnement à 2 minutes de chauffage par induction plus 5 minutes de chauffage par rayonnement, et est donc réduit de 23 minutes, soir 76%.

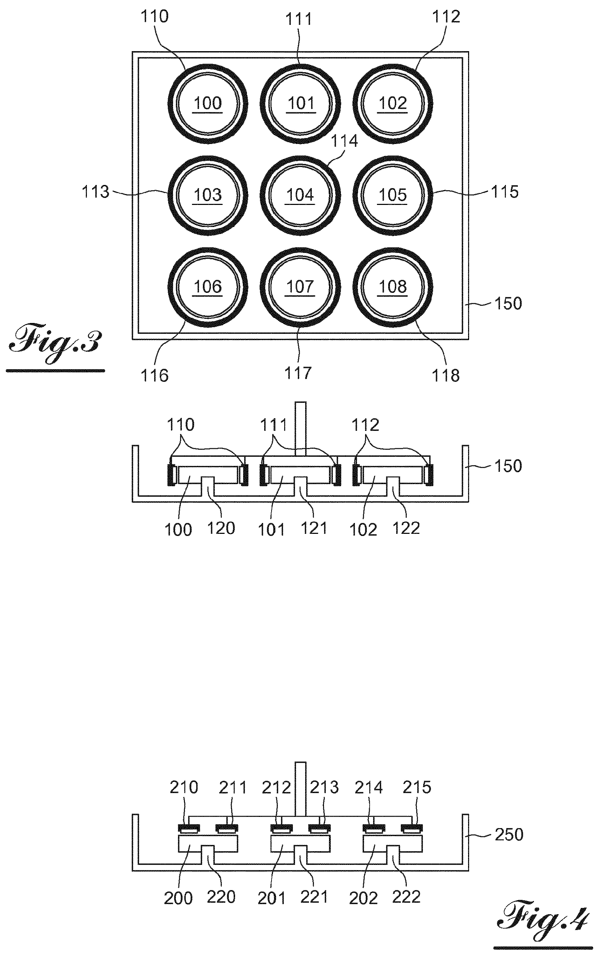

La préchauffe par induction peut être réalisée selon les schémas des figures 3 et 4, mais aussi selon d'autres architectures.

La cémentation peut être remplacée par une carbonitruration.

En figure 3, on a représenté une première architecture de l'installation de préchauffe par induction, vue de dessus en partie haute de la figure, et de profil en partie inférieure de la figure.

Les pièces 100 à 108 traitées dans cet exemple, purement illustratif et non limitatif, sont des pièces ayant la géométrie de cylindres de faible hauteur (ou des disques épais). Elles sont disposées sur la surface d'un plateau de traitement 150 pour le traitement à haute température, les unes à côté des autres dans un arrangement en réseau de maille carrée (par exemple). Les pièces 100 à 108 peuvent être maintenues par des supports de centrage et de calage 120, 121, 122, etc... qui les calent et les centrent sur le plateau de traitement 150. Des moyens pour générer des courants de Foucault 110 à 118 de forme cylindrique creuse sont placés autour de chacune des pièces concentriquement avec celles-ci, concentriquement également avec les supports de centrage et calage 120, 121, 122, .... Un support rétractable permet de déplacer l'ensemble des moyens pour générer des courants de Foucault 110 à 118, les mettre en place autour des pièces et libérer ensuite les pièces une fois le préchauffage effectué. Ainsi les moyens pour générer des courants de Foucault 110 à 118 sont rétractables.

Les pièces 100 à 108 présentent chacune une surface faisant face à une surface d'au moins une autre pièce voisine, et les moyens pour générer des courants de Foucault 110 à 118 sont disposés entre les surfaces respectives de pièces se faisant face.

En **figure 4**, on a représenté une deuxième architecture de l'installation de préchauffe par induction, vue de profil.

Les pièces 200 à 208 traitées dans cet exemple, purement illustratif et non limitatif, sont des pièces ayant la géométrie de cylindres de faible hauteur (ou des disques épais), comme dans la figure précédente. Elles sont disposées sur la surface d'un plateau de traitement 250 pour le traitement à haute température, les unes à côté des autres dans un arrangement en réseau de maille carrée. Elles ont toutes la même hauteur, et présentent par conséquent toutes une surface libre dans un même plan, opposé à la surface du plateau de traitement 250. Les pièces 200 à 208 peuvent être maintenues par des supports de centrage et de calage 220, 221, 222, etc... qui les calent et les centrent sur le plateau de traitement 250. Des moyens pour générer des courants de Foucault 210, 211, 212...etc sont placés face à la surface libre de chacune des pièces opposée au plateau de traitement 250. Un support rétractable permet de déplacer l'ensemble des moyens pour générer des courants de Foucault 210, 211, 212...etc, les mettre en place face à la surface libres des pièces et libérer ensuite les pièces une fois le préchauffage effectué. Ainsi les moyens pour générer des courants de Foucault 210, 211, 212...etc sont rétractables.

Il n'y a pas de moyen plus rapide que l'induction pour chauffer une pièce en acier. Le procédé présenté permet de doubler la productivité des fours, réduire le coût d'investissement des fours et augmenter l'efficacité des chaînes de production.

L'invention peut être mise en oeuvre avec une seule pièce en acier traitée, ou plusieurs pièces en acier traitées simultanément.

## Revendications

1. Procédé de traitement de surface, comprenant une étape préliminaire de préchauffe (10, 20) d'une pluralité de pièces (100-108,200-202) à traiter et une étape de traitement thermochimique (30) de ladite pluralité de pièces (100-108,200-202) une fois celles-ci préchauffées, l'étape préliminaire de préchauffe comprenant un chauffage de de ladite pluralité de pièces (100-108,200-202) par induction (10), **caractérisé en ce que** les pièces de la pluralité de pièces (100-108,200-202) sont disposées, aux fins de la préchauffe, sur un plateau (150 ; 250) pour traitement haute température.

2. Procédé de traitement de surface selon la revendication 1, **caractérisé en ce que** lesdites pièces de la pluralité de pièces (200-202) sont disposées, aux fins de la préchauffe pour présenter chacune au moins une surface libre dans un même plan, et des moyens pour générer des courants de Foucault (210-215) sont disposés en faisant face audites surfaces libres pour procéder au chauffage par induction desdites pièces.

3. Procédé de traitement de surface selon la revendication 1, **caractérisé en ce que** lesdites pièces de la pluralité de pièces (100-108) sont disposées, aux fins de la préchauffe pour présenter chacune une surface faisant face à une surface d'au moins une autre pièce de la pluralité, et des moyens pour générer des courants de Foucault (110-118) sont disposés entre les surfaces de pièces de la pluralité se faisant face pour procéder au chauffage par induction desdites pièces (100-108).

4. Procédé de traitement de surface selon l'une des revendications 1 à 3, dans lequel le traitement thermochimique (30) comprend une carbonitruration ou une cémentation.

5. Procédé de traitement de surface selon l'une des revendications 1 à 4, dans lequel le chauffage par induction (10) comprend une induction pendant une durée comprise entre 2 s et 20 min.

6. Procédé de traitement de surface selon l'une des revendications 1 à 5, dans lequel le chauffage par induction (10) est suivi, avant l'étape de traitement thermochimique (30), d'une étape de chauffage complémentaire par rayonnement (20).

7. Procédé de traitement de surface selon l'une des revendications 1 à 6, mettant en oeuvre des moyens rétractables pour générer des courants de Foucault (110-118 ; 210-215).
